Europäisches Patentamt

European Patent Office

Office européen des brevets

(19)

(11) Publication number: **0 506 180 B1**

(12) **EUROPEAN PATENT SPECIFICATION**

(45) Date of publication of patent specification: **03.05.95**

(51) Int. Cl.6: **B65G 53/20**, B65G 53/22, C25C 3/14, B65G 53/66

(21) Application number: **92200779.4**

(22) Date of filing: **19.03.92**

(54) **Apparatus for automatic level control in a closed channel or container for transport and/or distribution of fluidisable material.**

(30) Priority: **25.03.91 NO 911178**

(43) Date of publication of application:
**30.09.92 Bulletin 92/40**

(45) Publication of the grant of the patent:
**03.05.95 Bulletin 95/18**

(84) Designated Contracting States:
**DE ES FR GB IT**

(56) References cited:
**EP-A- 0 187 730**
**EP-A- 0 190 082**
**DE-A- 3 911 786**
**FR-A- 2 391 136**
**US-A- 3 870 374**

(73) Proprietor: **NORSK HYDRO a.s.**
**Bygdoy Allé 2**
**N-0257 Oslo 2 (NO)**

(72) Inventor: **Enstad, Gisle Gotfred**
**Granlia 11**
**N-5200 Os (NO)**
Inventor: **Nagell, Bernt**
**Arhaug 62**
**N-5500 Haugesund (NO)**

(74) Representative: **Bleukx, L.L.M.**
**c/o Norsk Hydro a.s.**
**Rue Neerveld 107**
**B-1200 Bruxelles (BE)**

## Description

The present invention concerns an arrangement for automatically controlling fluid level in a closed channel or container for transporting and/or distributing fluidisable material. The present invention comprises an air or gas permeable wall arranged in the channel or container and forming a partition between an upper run or pathway for the fluidisable material and a lower flue which is fed gas from a gas source via a tube, an inlet arranged in the channel or container for feeding fluidisable material to the channel or container, one or a plurality of outlets for continuous or intermittent withdrawal of material from the channel or container, and a tube for ventilating the channel or container.

The invention is particularly applicable as a "temporary" storage and distribution container for equipment used in aluminium electrolysis cells for transporting and intermittently feeding aluminium oxide and aluminium fluoride to such cells. The invention is also particularly applicable to an apportioning apparatus for sacks and bags where fluidisable material is fed in doses. The invention may, however, also be used as a plain transport channel when transporting fluidisable material from a supply area, a silo or the like, to a feeding site.

The term "fluidisable material" as used above denotes all solids existing in a finely divided form and having such granulometry and cohesion that the rate of feeding air streaming in at low velocity causes loss of adhesion between the finely divided particles and a reduction of their inner forces of friction.

The prior art discloses closed equipment for transporting fluidisable material where the material is apportioned from a tank or a channel-like container and where the material in the container is held between an upper and a lower level by the use of an automatic level control. The equipment functions such that, when the material in the container reaches the lower level, an electric signal is given from the level controller. The signal then acts upon an air valve of the fluidising channel such that the material is transported from a silo or the like via the channel to the container, which is filled. When the material in the container reaches an upper level, the signal from the level controller is cut off and the feeding of the material is stopped. The level control instrumentation may be of a mechanical, optical, ultrasound or some other type. It is, however, a disadvantage with such equipment where an automatic level control is used that the level control or level switch fails because of wear or clogging. The equipment therefore requires extensive maintenance and repair, and is expensive to use.

WO 84/01 560 shows a closed apparatus for transporting powder from a storage site to a feeding area where a horizontal or sloping transport tube is equipped with fluidising means in the form of a channel with an upper duct for fluidisable material separated from a lower gas flue with help of a permeable wall. Gas or air is continuously fed to the lower gas flue such that material in the upper duct in the channel is always in a fluidised state. An equilibrium column, also serving as an outlet for the fluidised gas, balances with its filling height a pressure Pf for the fluidising gas. This solution has no level controllers, but requires a very large consumption of air/gas since the fluidising air always at a pressure greater than Pf must be fed to the channel in order to keep it continuously filled with fluidisable material. The energy consumption is therefore great and the solution is expensive to apply.

Further, the nearest prior art EP-A-190 082 shows a feeder for pulverulent material having a vessel with a fluidisation floor connected at one end to a supply of the material by a column, a degassing and equilibrating column at the other end of the vessel, and an outlet for the material at the level of the floor. The column is provided with a pipe stub or extension wall protruding into the vessel. However, the feeder is not intended for and can not be used for automatically controlling the material level in the vessel.

An object of the present invention is to provide a fluidising channel or container for which one avoids using level switches, which require considerable maintenance. Another object of the invention is to provide such a channel or container in which energy consumption in the form of pressurized air or another gas is substantially lower than for the known solutions.

The invention is characterized in that an area under the pipe stub at the inlet of the container is not equipped with a fluidising wall or is equipped with a separately arranged fluidising wall having a separate gas feed, as defined in Claim 1. Claims 2-5 define advantageous embodiments of the invention.

With the inventive apparatus, the level of the fluidisable material in the channel is held under the level at the outlet of the pipe stub, and the feeding of air or other gas to the channel can be accurately limited either continually or intermittently such that no more air is fed than absolutely necessary. The principles for the operation and a more detailed description of the invention will be provided below with reference to the drawings, where

Fig. 1     shows a sketch of the composite inventive concept for transport and apportioning of fluidisable material where the channel or container is an integral part in accordance with the invention.

Fig. 2   shows in greater detail a part of the lowest channel shown in Fig. 1 where material in the channel is at a high level.

Fig. 3   shows the same part of the channel as shown in Fig. 2, but where the material is at a low level.

Fig. 4   shows also the same part of the channel as shown in Fig. 2, but with an alternative form comprising a slopingly arranged plate or sheet.

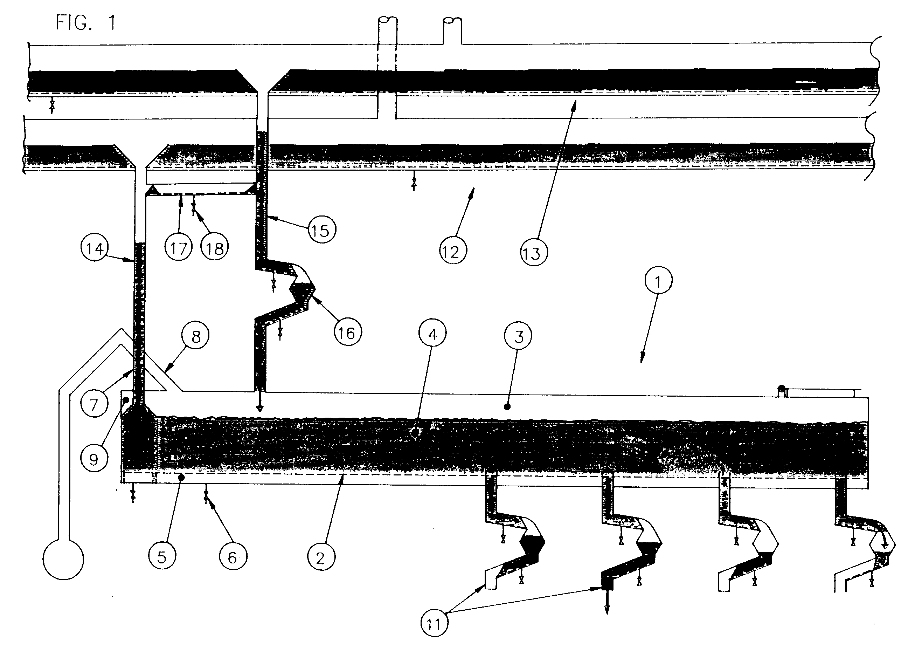

As stated above, Fig. 1 shows a sketch of the composite concept for transporting and apportioning fluidisable materials where the channel or container is an integral part in accordance with the invention. Further detailed as a preferred embodiment of the inventive concept, Fig. 1 shows an example of equipment for fluidised transport of powdered materials, such as aluminium fluoride or aluminium oxide, to an electrolysis cell for production of aluminium. Fig. 1 shows the arrangement for a cell where aluminium oxide is conducted from a silo or supply site via transport channel 12 and further through a tube 14 to a distributing channel or distributor container 1. Each cell is equipped with such a distributor container. To apportion material from the container, the preferred embodiment uses four dosing devices 11 which may be placed in various places in the cell (not further illustrated). Regarding the dosing devices 11, these are of the same type as described in applicant's Norwegian patent No. 162774 and will not be further described here.

Aluminium fluoride is conducted in a separate transport channel 13 from its supply source or silo and further transported via tube 15 and dosing device 16 to the distributor container 1 where the aluminium fluoride is mixed with aluminium oxide. This solution offers a practical and efficient solution preferable to feeding aluminium fluoride to the cell via separate dosing devices. This solution also offers the possibility of using the transport channel 13 as an alternative feeding channel for aluminium oxide, in case the channel 12 for some reason is rendered inoperative. A fluidising channel 17 is arranged between tubes 14 and 15. By feeding fluidising air to channel 17 (through the pipe stub 18) and simultaneously keeping the dosing devices 16 inactive, the material will stream over into tube 14. If it is desirable to use channel 13 to transport aluminium oxide, then the feeding of aluminium fluoride, which is used in substantially smaller quantities, must be performed manually.

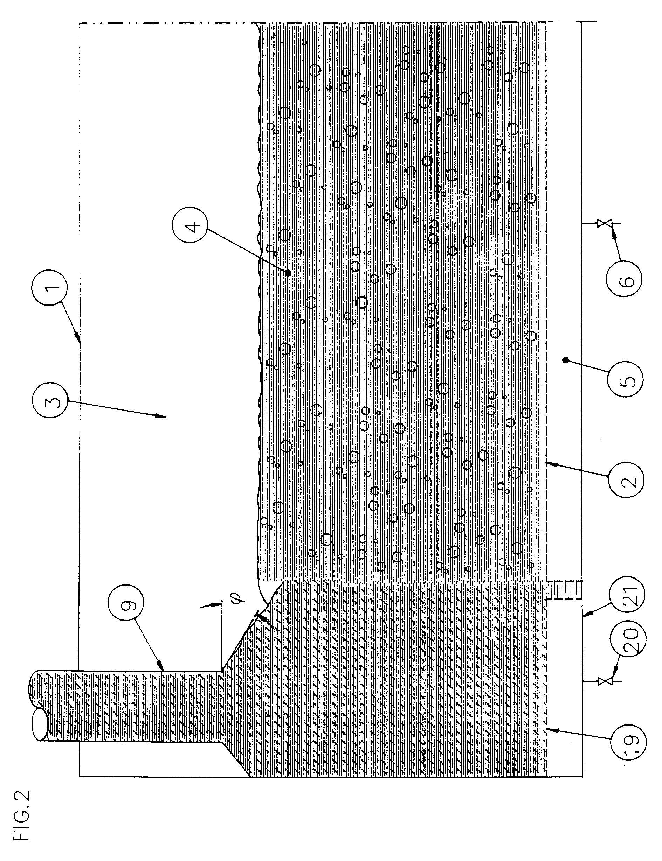

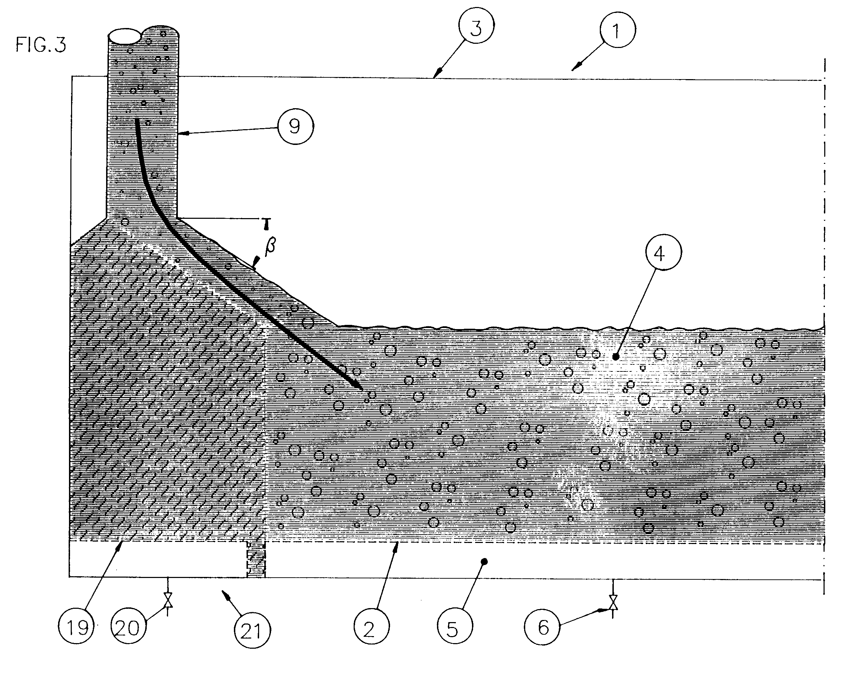

Each of the channels 12 and 13, together with the container or the channel 1, builds on the principles forming the basis for the present invention. In the subsequent paragraphs, therefore, the invention will be described further with reference to the lowest of the channels, channel 1, shown in Fig. 1 together with Figs. 2 and 3 which show in greater detail a part of the channel 1 in the area at the inlet where aluminium oxide is conducted into the channel from transport channel 12.

The channel in accordance with the present invention is either arranged horizontally or slopingly. The channel may advantageously be formed with a starting point in a closed fluidising channel where a fluidising body as described in applicant's Norwegian patent application No. 904306 is used. However, the drawings show an embodiment which is based upon a standard type solution where the closed channel is divided by means of a permeable wall or cloth 2 in such a manner that an both upper pathway 3 for fluidisable materials and a lower flue 5 for air or gas are formed. The material 4 in the channel 1, which may be horizontal or slightly inclined, is fluidised by feeding pressurized air or gas to flue 5 via air feeding pipe 6.

The material is fed to the channel via a pipe stub 9 extending into it. The pipe stub may be vertically adjustable to facilitate regulation of the degree of filling of the material in the channel, see later paragraphs. A separate fluidising zone 21 with its own dedicated permeable walk 19 and own gas feed 20 is arranged under the pipe stub. During normal operations, this zone is inactive.

The invention is based on the principle that when the material in the container outside the zone 21 is fluidised and the material within the zone (that is, under the pipe stub 9) is held inactive, the material will stream into the container as long as the angle of streaming $\beta$ is greater than the sliding angle $\phi$ for the material. Fig. 3 shows a situation where the angle of streaming $\beta$ is greater than the sliding angle $\phi$ and where material streams into the channel. In Fig. 2, another situation is shown; here, the level of the material has become so high that the material no longer streams out into the channel, that is $\beta \leq \phi$. Based on this principle, the material level in the channel can be regulated without using a separate, complicated level control requiring extra maintenance. The level is determined without further extra equipment by adjustment up or down of the pipe stub 9.

It is clear that the channel as described in this description of the preferred embodiment may be continually fed air, outside the zone 21, without the channel becoming overfilled. Such a continual feeding of air will, however, be inefficient and pointless unless there is simultaneously a more or less continual run off of material from the channel. In the embodiment shown in Fig. 1, the channel or container 1 is equipped with four dosing apparatuses 11. In this embodiment, it will be most advantageous to feed air to the channel each time one of the dosing apparatuses is filled with material. This will provide a type of intermittent operation.

Regarding the separate fluidising zone 21, as previously stated this zone is normally inactive, and the material over the zone is stationary. Over longer periods of time, this material can become "packed". To avoid packing, it may be necessary to fluidise this area at various intervals of time, dependent upon the type of material being transported, in order to loosen the material up. It may also be of interest to use fluidising zone 21 in connection with drainage of the channel.

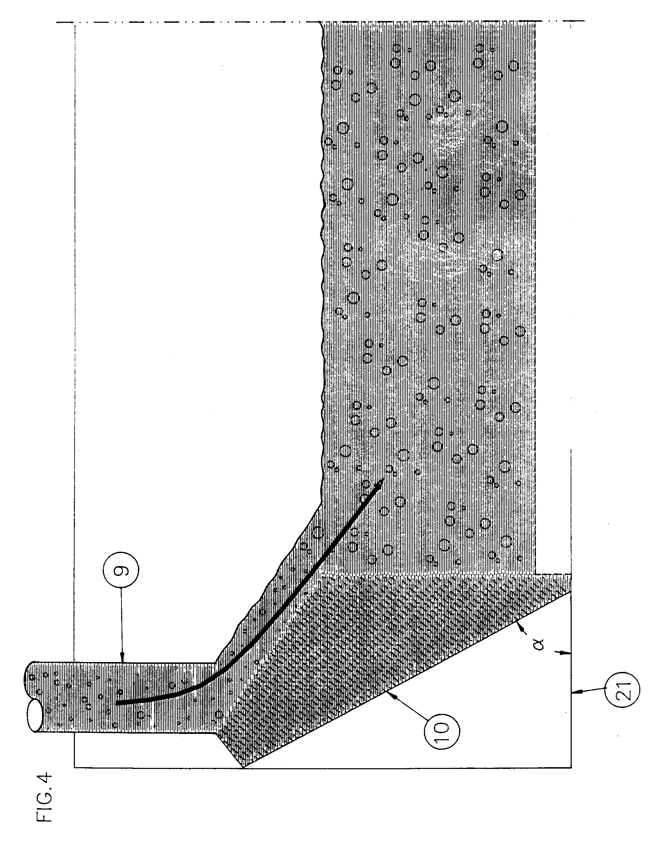

Fig. 4 shows an alternative form of zone 21 located under the pipe stub 9. Instead of a separate fluidising channel, this embodiment shows an apparatus using a sloping wall or plate 10 having an angle of inclination ($\alpha$) which is greater than the sliding angle ($\phi$). This plate may be acted upon by a vibrator which "shakes loose" any material having a tendency to pack or cluster.

With the present invention, a fluidising channel or container has been provided where the level of material can be regulated automatically without level control. At the same time, the invention provides an apparatus requiring considerably lower air consumption because the feeding of air in a simple manner can be performed intermittently and because low fluidising pressure and small quantities of fluidising air are required due to the low material level in the channel.

## Claims

1. An apparatus for automatic level control in a closed channel or container (1) for transport and/or distribution of fluidisable material (4), comprising an air- or gas-permeable wall (2) arranged in the channel and forming a partition between an upper pathway (3) for the fluidisable material and a lower flue (5) which is fed gas from a gas source via a tube (6), an inlet with a pipe stub (9) extending into the upper pathway of the channel for the feeding of fluidisable material to the channel, one or more outlets for continual or intermittent run-off of material from the channel, together with a tube (8) for ventilation of the channel, **characterized in that** an area defined under the pipe stub is not equipped with a fluidising wall or is equipped with a separately arranged fluidising wall with separate gas feed.

2. The apparatus according to claim 1, **characterized in that** the pipe stub (9) can be raised and lowered.

3. The apparatus according to claims 1 and 2, **characterized in that** a plate (10) is arranged in the area under the pipe stub, said plate having an angle of inclination ($\alpha$) which is greater than an a sliding angle ($\phi$) for the fluidised material.

4. The apparatus according to claims 1-3, **characterized in that** gas is continuously fed to the gas flue (5) of the channel.

5. The apparatus according to claims 1-3, **characterized in that** the channel is equipped with two or more dosing devices (11) for apportioning feeding of fluidisable material from the channel, wherein air is fed to the channel's gas flue (5) at the same time as each of the dosing devices apportion a dose of material.

## Patentansprüche

1. Vorrichtung zur automatischen Niveauregelung in einem geschlossenen Kanal oder Behälter (1) zum Befördern und/oder Verteilen von fließfähigem Gut (4), mit einer luft- oder gasdurchlässigen Wand (2), welche in dem Kanal angeordnet ist und eine Trennwand bildet zwischen einem oberen Seitenweg (3) für das fließfähige Gut und einem unteren Abzugsrohr (5), welches über die Leitung (6) mit Gas aus einem Gasvorrat versorgt wird, mit einer aus einem Rohrstutzen (9) bestehenden Zufuhr, die sich in den oberen Seitenweg des Kanals hineinerstreckt, zwecks Einspeisens von fließfähigem Gut in den Kanal, mit einer oder mehreren Austrittsöffnungen zum kontinuierlichen oder intermittierenden Abzug des Gutes aus dem Kanal, sowie mit einer Leitung (8) zur Belüftung des Kanals, dadurch gekennzeichnet, daß ein unterhalb dem Leitungsstutzen abgegrenzter Bereich nicht mit einer Fluidisierungswand ausgestattet ist oder aber mit einer getrennt angeordneten Fluidisierungswand mit einer getrennten Zufuhr für das Gas versehen ist.

2. Die Vorrichtung nach dem Anspruch 1, dadurch gekennzeichnet, daß der Leitungsstutzen (9) angehoben oder abgesenkt werden kann.

3. Die Vorrichtung nach den Ansprüchen 1 und 2, dadurch gekennzeichnet, daß eine Platte (10) in dem Raum unterhalb dem Leitungsstutzen angeordnet ist, daß besagte Platte einen Neigungswinkel ($\alpha$) besitzt, welcher größer ist als der Fließwinkel ($\phi$) des fließfähigen Gutes.

**4.** Die Vorrichtung nach den Ansprüchen 1 - 3, dadurch gekennzeichnet, daß Gas ohne Unterbrechung in das Abzugsrohr (5) des Kanals eingespeist wird.

**5.** Die Vorrichtung nach den Ansprüchen 1 - 3, dadurch gekennzeichnet, daß der Kanal mit einer oder mehreren Dosiervorrichtungen (11) ausgerüstet ist, zwecks verteilender Zuleitung von fließfähigem Gut aus dem Kanal, wobei Luft in das Abzugsrohr (5) des Kanals eingespeist wird in demselben Moment wo eine jede der Dosiervorrichtungen einen Mengenanteil des Gutes verteilt.

**Revendications**

**1.** Appareil de régulation de niveau automatique dans un canal ou conteneur fermé (1) pour le transport et/ou la distribution d'une matière fluidisable (4), comprenant une paroi perméable à l'air ou au gaz (2) agencée dans le canal et formant une cloison entre un trajet supérieur (3) pour la matière fluidisable et une conduite inférieure (5) qui est alimentée en gaz par une source de gaz via un tube (6), une entrée comportant un tronçon de tube (9) s'étendant dans le trajet supérieur du canal pour l'acheminement de matière fluidisable au canal, une ou plusieurs sorties pour l'écoulement permanent ou intermittent de matière provenant du canal conjointement avec un tube (8) pour la ventilation du canal, caractérisé en ce qu'une zone définie sous le tronçon de tube n'est pas équipée d'une paroi de fluidisation ou est équipée d'une paroi de fluidisation agencée séparément avec une alimentation séparée de gaz.

**2.** Appareil selon la revendication 1, caractérisé en ce que le tronçon de tube (9) peut être relevé ou abaissé.

**3.** Appareil selon la revendication 1 ou 2, caractérisé en ce qu'une plaque (10) est agencée dans la zone en dessous du tronçon de tube, ladite plaque ayant un angle d'inclinaison (þ) qui est supérieur à un angle de glissement (þ) pour la matière fluidisée.

**4.** Appareil selon les revendications 1 à 3, caractérisé en ce que du gaz est acheminé en permanence à la conduite de gaz (5) du canal.

**5.** Appareil selon les revendications 1 à 3, caractérisé en ce que le canal est équipé de deux ou plusieurs dispositifs de dosage (11) pour doser l'acheminement de matière fluidisable provenant du canal, dans lequel de l'air est acheminé à la conduite de gaz du canal (5) en même temps que chacun des dispositifs de dosage définit une dose de matière.

FIG. 1

FIG.2

FIG.3

FIG.4